# EUROPEAN PATENT APPLICATION

(11) **EP 4 582 979 A1**
(43) Date of publication of application: **09.07.2025**
(21) Application number: 24223329.4
(22) Date of filing: 26.12.2024
(51) Int. Cl.: G06F 16/958

(54) **METHOD, APPARATUS, DEVICE AND MEDIUM FOR GENERATING INFORMATION CARD OF OBJECT**

(30) Priority: 28.12.2023 CN 202311845331
(71) Applicant: Beijing Youzhuju Network Technology Co., Ltd., Beijing 101299 (CN)
(72) Inventor: LI, Donglin, Beijing, 100028 (CN); ZHANG, Bo, Beijing, 100028 (CN)
(74) Representative: Dentons UK and Middle East LLP

(57) **Abstract**

The disclosure provides a method, an apparatus, a device and a medium for generating an information card of an object. In the method, in response to receiving a page address of a page comprising a set of attributes of a target object, obtaining a set of page elements in the page. Determining the set of attributes of the target object based on the set of page elements. Generating an information card of the target object based on the set of attributes With the exemplary implementation of the disclosure, only the page address pointing to the object needs to be input, and the information card can be automatically generated based on the information in the page corresponding to the page address, thereby providing summary information of the object in a visual manner.

## Description

### FIELD

Example implementations of the disclosure generally relate to image processing, and in particular, to a method, an apparatus, a device, and a computer-readable storage medium for generating an information card of an object.

### BACKGROUND

Image processing technology has been widely used in various fields, and can generate information cards for various objects, so as to provide summary information of objects in a visual manner. The object may include a plurality of meanings. For example, in an item management system, an information card may be generated for each item to indicate a name, a type, and the like of the item; and in a project management system, an information card may be generated for each project to describe a name, a summary, and the like the of the project. However, existing processes for generating information cards involve a large amount of manual labor, and it is desirable to generate information cards for objects in a simpler and efficient manner.

### SUMMARY

In a first aspect of the disclosure, a method for generating an information card of an object is provided. In the method, in response to receiving a page address of a page comprising a set of attributes of a target object, a set of page elements in the page are obtained. The set of attributes of the target object are determined based on the set of page elements. An information card of the target object is generated based on the set of attributes.

In a second aspect of the disclosure, an apparatus for generating an information card of an object is provided. The apparatus comprises: an obtaining module configured to in response to receiving a page address of a page comprising a set of attributes of a target object, obtain a set of page elements in the page; a determining module configured to determine the set of attributes of the target object based on the set of page elements; and a generating module configured to generate an information card of the target object based on the set of attributes.

In a third aspect of the disclosure, an electronic device is provided. The electronic device comprises: at least one processing unit; and at least one memory coupled to the at least one processing unit and storing instructions for execution by the at least one processing unit, the instructions, when executed by the at least one processing unit, causing the electronic device to perform the method according to the first aspect of the disclosure.

In a fourth aspect of the disclosure, there is provided a computer-readable storage medium having stored thereon a computer program which, when executed by a processor, causes the processor to implement the method according to the first aspect of the disclosure.

It should be understood that the content described in the section is not intended to limit key features or important features of implementations of the disclosure, nor is it intended to limit the scope of the disclosure. Other features of the disclosure will become readily understood from the following description.

### BRIEF DESCRIPTION OF DRAWINGS

The above and other features, advantages, and aspects of the various implementations of the disclosure will become more apparent from the following detailed description taken in conjunction with the accompanying drawings. In the drawings, the same or similar reference numbers refer to the same or similar elements, wherein:
FIG. 1 illustrates a block diagram of an application environment according to an example implementation of the disclosure;
FIG. 2 illustrates a block diagram for generating an information card of an object according to some implementations of the disclosure;
FIG. 3 illustrates a block diagram of padding data to a template to generate an information card according to some implementations of the disclosure;
FIG. 4 illustrates a block diagram of a correspondence between a page and a template according to some implementations of the disclosure;
FIG. 5 illustrates a block diagram of a generation page for generating an information card according to some implementations of the disclosure;
FIG. 6 illustrates a block diagram of presenting a generated information card to a user, according to some implementations of the disclosure;
FIG. 7 illustrates a flowchart of a method for generating an information card of an object according to some implementations of the disclosure;
FIG. 8 illustrates a block diagram of an apparatus for generating an information card of an object according to some implementations of the disclosure; and
FIG. 9 illustrates a block diagram of a device capable of implementing various implementations of the disclosure.

### DETAILED DESCRIPTION

Implementations of the disclosure will be described in more detail below with reference to the accompanying drawings. While certain implementations of the disclosure are shown in the accompanying drawings, it should be understood that the disclosure may be implemented in various forms and should not be construed as limited to the implementations set forth herein, but rather, these implementations are provided for a more thorough and complete understanding of the disclosure. It should be understood that the drawings and implementations of the disclosure are for illustrative purposes only and are not intended to limit the scope of the disclosure.

In the description of implementations of the disclosure, the terms "comprising", "including" and the like should be understood to open-ended, i.e., "including but not limited to". The term "based on" should be understood as "based at least in part on". The terms "one implementation" or "the implementation" should be understood as "at least one implementation". The term "some implementations" should be understood as "at least some implementations". Other explicit and implicit definitions may also be included below. As used herein, the term "model" may represent an association between various data. For example, the above association may be obtained based on various technical solutions currently known and/or to be developed in the future.

It may be understood that the data involved in the technical solution (including but not limited to the data itself, the acquisition or use of the data) should follow the requirements of the corresponding laws and regulations and related rules.

lt can be understood that, before the technical solutions disclosed in the embodiments of the disclosure are used, the types, the usage scope, the usage scenario and the like of personal information related to the disclosure should be notified to the user in an appropriate manner according to the relevant laws and regulations, and the authorization of the user is obtained.

For example, in response to receiving an active request from a user, prompt information is sent to the user to explicitly prompt the user that the requested operation to be performed would require acquisition and use of personal information of the user. Therefore, the user can autonomously select whether to provide personal information to software or hardware such as an electronic device, an application, a server, or a storage medium that performs the operations of the technical solution of the disclosure, according to the prompt information.

As an optional but non-limiting implementation, in response to receiving an active request from the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the disclosure, and other manners of meeting related laws and regulations may also be applied to implementations of the disclosure.

The term "in response to" as used herein means a state in which a respective event occurs or condition is satisfied. It will be appreciated that the timing of execution of a subsequent action performed in response to the event or condition is not necessarily strongly correlated with the time at which the event occurs or the condition holds. For example, in some cases, subsequent actions may be performed immediately when the event occurs or the condition holds; while in other cases, subsequent actions may be performed after a period of time elapses after the event occurs or the condition holds.

### EXAMPLE ENVIRONMENT

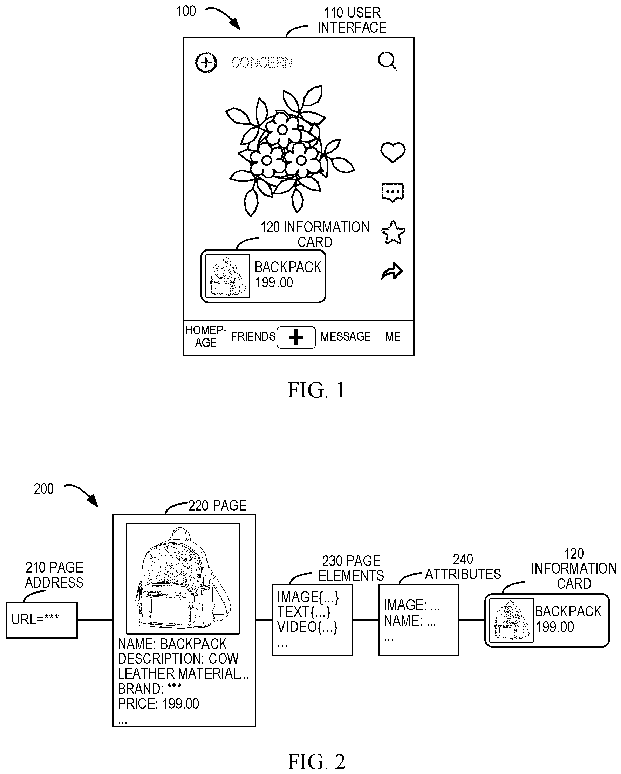

Image processing technology has been widely used in various fields, and can generate information cards for various objects, so as to provide summary information of objects in a visual manner. Hereinafter, an application environment of an information card for generating an object will be described by taking item management as an example. FIG. 1 illustrates a block diagram 100 of an application environment according to an example implementation of the disclosure. As shown in FIG. 1, an information card 120 may be a control in a user interface 110 of an application. The applications herein may be various types of applications, including, but not limited to, social applications, video applications, short video applications, and the like.

The information card 120 may be provided in the user interface 110 during operations of an end user of the application. When the user clicks on the information card 120, the user may be directed to open a page corresponding to the information card 120. As shown in FIG. 1, the information card 120 may be an image and the image includes various relevant information of an object (e.g., a backpack). Here, the object may be, for example, an item for sale in an online sales website, and each object may have its own page. In the prior art solution for generating the information card 120, it is necessary to manually extract information from the page and make the information card 120. If a large number of objects exist, a great workload will be generated, at which point it is desirable to generate an information card of an object in a more convenient and efficient manner.

### GENERATING A SUMMARY OF AN INFORMATION CARD

In order to at least partially solve the deficiencies in the prior art, according to an example implementation of the disclosure, a method for generating an information card of an object is provided. A summary of according to an example implementation of the disclosure is described with reference to FIG. 2, and FIG. 2 illustrates a block diagram for generating an information card of an object according to some implementations of the disclosure. As shown in FIG. 2, a page address 210 of a page 220 including a set of attributes of a target object may be received. In this example, the object may represent an item "backpack" for sale, and the page 220 may be a page in an online sales website for selling a "backpack."

Further, a set of page elements 230 in the page 220 may be obtained. The page elements 230 may be various elements defined in the page 220, such as an image, a text, a video, a link, and the like. A set of attributes 240 of the target object may be determined based on the set of page elements 230, e.g., an image, a name, and the like of the item. Then, the information card 120 of the target object may be generated based on a set of attributes 240.

With example implementations of the disclosure, various attributes of the object may be extracted directly from the page of the object, thereby automatically generating the information card using the extracted various attributes. In this way, In the process of generating the information card, a large amount of manual labor is not involved, and the information card can be automatically generated based on the information in the page 220 corresponding to the page address 210 only by inputting the page address 210 pointing to the object.

### THE DETAILED PROCESS OF GENERATING AN INFORMATION CARD

Having described a summary of generating an information card, various details will be described below. According to an example implementation of the disclosure, in the process of obtaining a set of page elements in a page, the code in the page may be analyzed, thereby extracting various structured information defined in the page. In one example, the extracted structured information may be managed according to the structure shown in Table 1 below:

**TABLE 1 Extracted Structured Information**

| Line Number | | Content |
|---|---|---|
| 1-6 | | { |
| | | "title": "xxxx", |
| | | "style": { |
| | | "width": 375, |
| | | "height": 1334 |
| | | }, |
| 7-62 | 7-18 | "contents": [ |
| | | { |
| | | "type": "img", |
| | | "src": "https://xxx", |
| | | "is_hidden": true, |
| | | "style": { |
| | | "width": 375, |
| | | "height": 375, |
| | | "top": 0, |
| | | "left": 0 |
| | | } |
| | | }, |
| | 19-33 | { |
| | | "type": "link", |
| | | "link": "https://xxx.com/", |
| | | "text": "xxx", |
| | | "is_hidden": false, |
| | | "style": { |
| | | ... |
| | | } |
| | | }, |
| | 34-47 | { |
| | | "type": "video", |
| | | "src": " ", |
| | | "is_hidden": false, |
| | | "style": { |
| | | ... |
| | | } |
| | | }, |
| | 48-62 | { |
| | | "type": "text", |
| | | "text": "", |
| | | "is_hidden": false, |
| | | "style": { |
| | | ... |
| | | } |
| | | } |
| | | ], |
| 63-91 | 63-77 | "components": [{ |
| | | "type": "swiper", |
| | | "is_hidden": false, |
| | | "length": 4, // number of frames of swiper |
| | | "direction": "horizontal", // vertical, horizontal |
| | | "has_nested_swiper": false, // whether or not the swiper is nested |
| | | "style": { |
| | | ... |
| | | }, |
| | 78-91 | "imgs": [{ |
| | | "src": " ", |
| | | "style": { |
| | | ... |
| | | } |
| | | }] |
| | | }] |
| | | } |

As shown in Table 1, lines 1-7 show the title of the extracted page (i.e., title), and the style of the title is width = 375, height = 1224. Lines 8-91 show information of other page elements in the page. For example, lines 7-62 show content (i.e., "content") in the page, and the content may include a plurality of parts: an image (i.e., "img") shown in lines 7-18, a link (i.e., "link") shown in lines 19-33, a video (i.e., "video") shown in lines 34 -47, and a text (i.e., "text") shown in lines 48-62. Further, lines 63-91 show components (i.e., "components") in a page, and may include a plurality of components: a plug-in (i.e., "swiper") shown in lines 63-77, and an image shown in lines 78-91.

Various page elements may be extracted from the page based on various extraction techniques currently known and/or to be developed in the future. In this way, multifaceted information may be extracted from the page to provide a data basis for determining various attributes of the object. It should be understood that Table 1 merely schematically illustrates one example for storing extracted information, alternatively and/or additionally, other ways may be used to store the extracted information.

According to an example implementation of the disclosure, a set of attributes of a target object are determined based on a set of page elements. Specifically, a set of attributes may be determined based on at least one of: a semantic analysis for a set of page elements, a machine learning model describing an association between a set of page elements and a set of attributes. With example implementations of the disclosure, various approaches can be fully utilized to extract the attributes of the target object, thereby improving the efficiency of generating the information card.

Specifically, the semantic analysis may be performed on the data structure shown in Table 1, to determine the corresponding attribute. For example, the corresponding attribute may be searched for based on information such as each keyword in the page. In the context of the disclosure, a set of attributes may include at least one of: a name, a description, an image, a brand, a price, a vendor, and the like of the target object. Specifically, keywords such as "name" and "price" may be searched for in the text to determine corresponding attributes. For another example, an image located at a significant position in the page may be used as an image of the object. For another example, whether the content in the image is consistent with the name of the object may be identified, and then the image of the object is determined. In this way, various attributes of the object may be determined in a simple and efficient manner, thereby facilitating the insertion of various information into the information card.

According to an example implementation of the disclosure, various attributes of the object may be determined based on a machine learning model. For example, a pre-trained machine learning model may be obtained, and the model may describe an association between a set of page elements and a set of attributes. For example, the training process may be performed with labeled page samples. In this case, when inputting the data shown in Table 1 to the trained model, information such as a name, a description, an image, a brand, a price, a vendor, and the like of the target object may be received from the model. In this way, the powerful processing capability of the machine learning model may be fully utilized to determine various attributes of the object in a more accurate manner. Alternatively, and/or additionally, cross-validation may be performed in both ways to determine attributes of the target object in a more accurate manner.

According to an example implementation of the disclosure, the extracted attributes may be stored in various functional manners, and various attributes may be stored in the data structure shown in Table 2. In Table 2, the extracted various attributes may be stored in various fields. For example, the name "backpack" of the object may be stored in the title field "title", the price "199.00" of the object may be stored in the price field "price", the description "cow leather material" of the object may be stored in the description field "description", the image of the object may be stored in the image field "image", and so forth.

**TABLE 2 Attribute Information**

| |
|---|
| ```
{
        products: [{
             title: ",
             origin_price: ",
             price: ",
             description: ",
             image: ",
              selling_point: "
         }],
   }
 
``` |

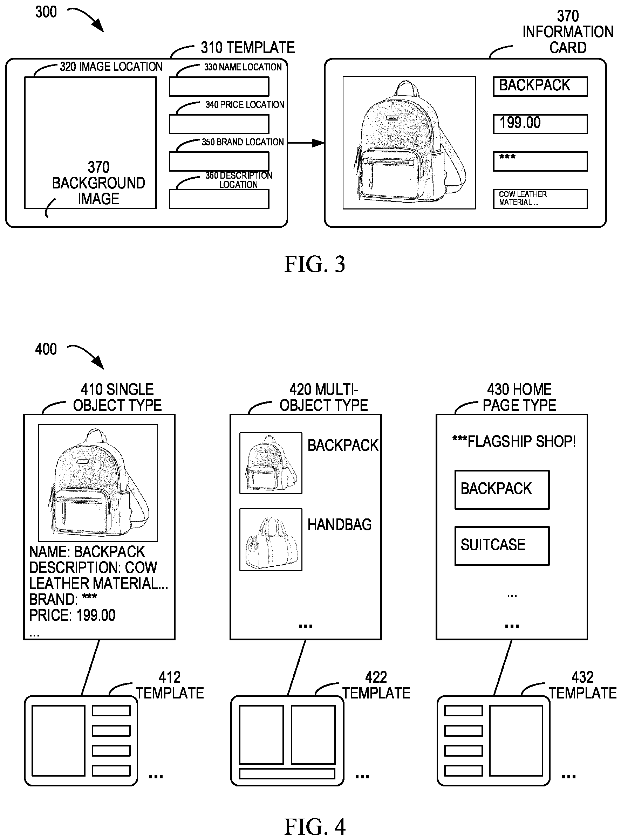

According to an example implementation of the disclosure, a template may be used to specify a layout of an information card. Referring to FIG. 3, more details regarding templates are described, which illustrates a block diagram 300 of padding data to a template to generate an information card, according to some implementations of the disclosure. As shown on the left side of FIG. 3, the template 310 may include: a background image 370, and a set of insertion locations corresponding to a set of attributes, respectively. Specifically, the background image 370 may represent a background of the information card. An image of the object may be inserted at an image location 320, a name of the object may be inserted at a name location 330, a price of the object may be inserted at a price location 340, a brand of the object may be inserted at a brand location 350, a description of the object may be inserted at a description location 360, and so forth.

According to an example implementation of the disclosure, each position may be defined in a plurality of manners. For example, for the image position 320, a location (x0, y0) of an upper left corner of the image in the template 310 may be specified, and a width and a height of the image may be specified. Alternatively, and/or additionally, the location (x0, y0) of the upper left corner of the image and a location (x1, y1) of a lower right corner of the image may be specified.

Further, when the information card of the target object is generated, a set of attributes may be inserted into a set of insertion positions to generate the information card of the target object. In this case, a mapping relationship may be established between each field shown in Table 2 and each location in the template 310, thereby facilitating the insertion of a corresponding attribute to each location. As shown on the right side of FIG. 3, the generated information card 370 is shown, and in this case, a corresponding attribute has been inserted into each location. In this way, in the process of managing the information card, only the extracted attribute needs to be inserted into the corresponding location, thereby simplifying the process of generating the information card. Further, if it is desired to adjust the layout of the information card, the background image and the insertion position and corresponding attributes in the template may be adjusted to modify the information card with higher efficiency.

According to an example implementation of the disclosure, one or more candidate templates may be predefined. For example, a simple template and a detailed template may be established. In this case, the simple template may include only the image and price of the object, and the detailed template may include more information such as the image, description, price, etc. of the object. When the information card is generated, the template for specifying the layout of the information card may be obtained, and then the information card of the target object is generated based on the template. With the example implementations of the disclosure, the layout of each piece of content in the information card may be pre-specified, thereby facilitating the presentation of a plurality of pieces of information related to the target object.

According to an example implementation of the disclosure, a corresponding template may be selected based on a page type of the page. Specifically, the page type of the page may be determined based on a set of page elements to establish a plurality of candidate templates. Here, the page type includes at least one of: a single object type, a multi-object type, and a homepage type. Referring to FIG. 4 for more details, FIG. 4 illustrates a block diagram 400 of a correspondence between a page and a template according to some implementations of the disclosure.

As shown in FIG. 4, a single object type 410 represents that a page of an object only involves a single object, e.g., one item "backpack". A multi-object type 420 represents that the page of the object involves multiple objects, e.g., multiple items "backpack" and "handbag", etc. A home page type 430 represents a home page of a certain store in the page of the object, and the home page may provide access to a plurality of items, and so on. The respective templates may be pre-specified for different types of pages, e.g., a template 412 may be specified to the single object type 410, a template 422 may be specified to the multi-object type 420, and a template 432 may be specified to the homepage type 430, and so on. In this case, the attribute information shown in Table 2 may be extended to that shown in Table 3. In Table 3, the page type field "page_type" may specify the page type.

**TABLE 3 Attribute Information**

| |
|---|
| ```
   {
       page_type: 'single_product_page',
       products: [{
             title: ",
             origin_price: ",
             price: ",
             description: ",
             image: ",
             selling_point: "
        }],
   }
``` |

Further, a template matching the page type may be selected from the plurality of candidate templates. According to an example implementation of the disclosure, the corresponding template may be automatically selected based on the page type of the page input by the user. With example implementations of the disclosure, multiple candidate templates may be customized in advance for different types of pages. In this manner, various types of pages may be presented in different layouts, such that the information card may provide more information in a more suitable layout.

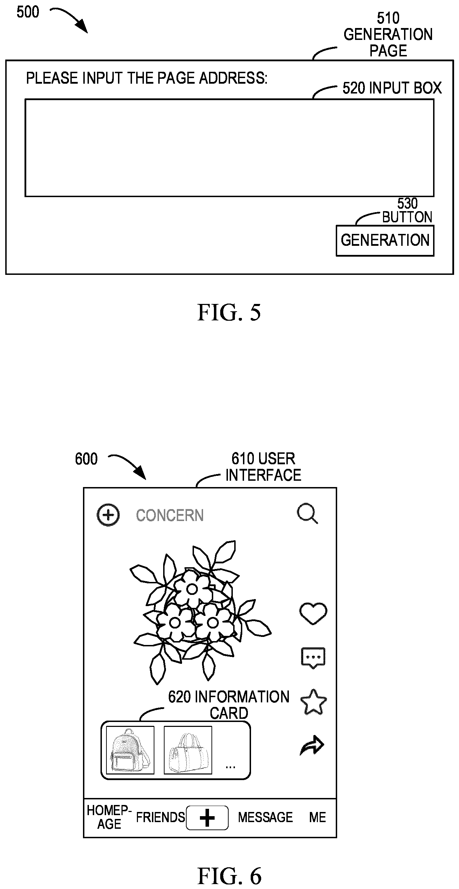

According to an example implementation of the disclosure, an interaction interface for receiving a page address may be provided. More details are described with reference to FIG. 5, which illustrates a block diagram 500 of a page for generating an information card according to some implementations of the disclosure. As shown in FIG. 5, a generation page 510 may be provided, and interaction between the user with the generation page 510 may be detected. For example, in the case that it is detected that the user inputs a page address into an input box 520, the method described above may be performed to extract the attribute of the target object from the page indicated by the page address to generate the corresponding information card.

According to an example implementation of the disclosure, the user may input one or more page addresses in the input box 520. It should be understood that generating the page 510 is merely illustrative, and alternatively and/or additionally, the page address may be received in other manners. For example, the user may drag a file including one or more page addresses to the input box 520, and so forth. Alternatively, and/or additionally, a user may input an entry address of an online shopping website into the input box 520 and specify a hierarchical scope of pages to be traversed. In this case, corresponding information cards will be generated for objects in a plurality of pages belonging to the hierarchical scope. With example implementations of the disclosure, a user may be allowed to cause one or more information cards to be generated at once as needed, thereby improving generation efficiency.

According to an example implementation of the disclosure, the corresponding template may be automatically selected based on the specified page type, or the user may be allowed to manually select the template of the information card. Specifically, an interaction interface for selecting a template may be provided, and a template corresponding to the interaction is selected from the plurality of candidate templates if an interaction for the interaction interface is detected. With example implementations of the disclosure, a user is allowed to select a template that is desired by himself/herself, making the generated information card more consistent with the user expectations. Alternatively, and/or additionally, the user may be allowed to verify whether the automatically selected template fits the page of the item, thereby generating an information card that is more consistent with the user expectations.

It should be understood that the generation page 510 described above may be a page in an application management tool. For example, the application management tool may be used to determine which objects to generate the information card, at which point the user may be a user of the application management tool, e.g., an administrator of the application, and so on.

According to an example implementation of the disclosure, the generated information cards may be stored in a repository to provide a matching information card to an end user of the application. According to an example implementation of the disclosure, the generated information card may be sent to the client device running the application, so as to provide the page in response to detecting the interaction with the information card. FIG. 6 illustrates a block diagram 600 of presenting a generated information card to a user according to some implementations of the disclosure. As shown in FIG. 6, in a user interface 610 of an application, an information card 620 may be provided to an end user of the application. The information card 620 may be, for example, generated based on a page of the multi-object type 420 in FIG. 4, and in this case, the information card 620 may relate to images of a plurality of objects such as a backpack and a handbag. If it is detected that the end user clicks the information card 620, the corresponding page may be opened to provide a sales page of a plurality of items.

According to an example implementation of the disclosure, the target object may include at least one of: a physical item and a virtual item. It should be understood that the process of generating the information card is described above with reference to physical items as examples of the object. Alternatively, and/or additionally, the object may further include a virtual item, e.g., an audio, a video, a game, an application, a page, etc. Specifically, in a process of using an application by an end user, a corresponding information card may be provided at a client device running the application. For example, when a user is watching a video of a sports game, an information card directed to a news page related to the sports game may be provided; when a user is watching a movie trailer, an information card directed to a ticket purchase website of the movie may be provided; and so on. With example implementations of the disclosure, an information card may be generated for more types of objects, thereby providing richer information to end users.

According to an example implementation of the disclosure, before presenting the information card, the information card may be updated based on content being browsed by the user. Assuming that the user is browsing the content with a bright tone, the background image in the template may be updated to have the bright tone; assuming that the user is browsing the content with a gray tone, the background image in the template may be updated to have the gray tone. In this way, an information card may be presented in an application in a more coordinated manner. According to an example implementation of the disclosure, the background image in the information card may be updated based on an interface style of the application. In this way, the same information card may be shared among multiple different applications. In this way, the generation and management process of the information card can be simplified.

With example implementations of the disclosure, an information card generation tool may be utilized to create an information card of one or more objects. In this way, in the process of generating the information card, a large amount of manual labor is not involved, only the page address pointing to the object needs to be input, and the information card can be automatically generated based on the information in the page corresponding to the page address.

### EXAMPLE PROCESSES

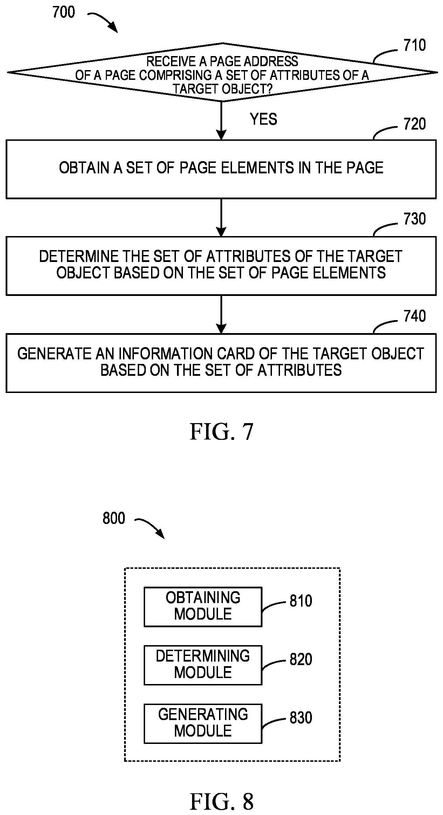

FIG. 7 illustrates a flowchart of a method 700 for generating an information card of an object according to some implementations of the disclosure. At block 710, a page address of a page including a set of attributes of a target object is received. If a page address is received, the method proceeds to block 720. At block 720, a set of page elements in the page are obtained, and at block 730, a set of attributes of the target object are determined based on the set of page elements. At block 740, an information card of the target object is generated based on the set of attributes.

According to an example implementation of the disclosure, generating the information card of the target object further comprises: obtaining a template for specifying a layout of the information card; and generating the information card of the target object based on the template.

According to an example implementation of the disclosure, the obtaining the template for specifying the layout of the information card comprises: determining a page type of the page based on the set of page elements, the page type comprising at least one of: a single object type, a multi-object type, or a homepage type; and selecting the template matching the page type, from a plurality of candidate templates.

According to an example implementation of the disclosure, obtaining the template for specifying the layout of the information card comprises: providing an interaction interface for selecting the template; and in response to detecting an interaction for the interaction interface, selecting a template corresponding to the interaction, from a plurality of candidate templates.

According to an example implementation of the disclosure, determining the set of attributes of the target object based on the set of page elements comprises: determining the set of attributes based on at least one of: a semantic analysis for the set of page elements, or a machine learning model describing an association between a set of page elements and a set of attributes.

According to an example implementation of the disclosure, the template comprises: a background image, and a set of insertion positions respectively corresponding to the set of attributes, and generating the information card of the target object comprises: inserting the set of attributes at the set of insertion positions to generate the information card of the target object.

According to an example implementation of the disclosure, the method 700 further includes: providing an interaction interface for receiving the page address; and in response to detecting an interaction for the interaction interface, performing the method.

According to an example implementation of the disclosure, the method 700 further includes: sending the information card to a client device to provide the page in response to detecting an interaction with the information card.

According to an example implementation of the disclosure, the set of page elements comprises at least one of: an image, a text, a video, a link, or a component, and the set of attributes comprises at least one of: a name, a description, an image, a brand, or a price of the target object.

According to an example implementation of the disclosure, the target object comprises at least one of: a physical item or a virtual item.

### EXAMPLE APPARATUS AND DEVICE

FIG. 8 illustrates a block diagram of an apparatus 800 for generating an information card of an object according to some implementations of the disclosure. The apparatus 800 includes: an obtaining module 810 configured to in response to receiving a page address of a page comprising a set of attributes of a target object, obtain a set of page elements in the page; a determining module 820 configured to determine the set of attributes of the target object based on the set of page elements; and a generating module 830 configured to generate an information card of the target object based on the set of attributes.

According to an example implementation of the disclosure, the generating module further includes: a template obtaining module configured to obtain a template for specifying a layout of the information card; and generating the information card of the target object based on the template.

According to an example implementation of the disclosure, the template obtaining module includes: a type determining module, configured to determine a page type of the page based on the set of page elements, the page type comprising at least one of: a single object type, a multi-object type, or a homepage type; and a selecting module, configured to select the template matching the page type, from a plurality of candidate templates.

According to an example implementation of the disclosure, the template obtaining module includes: a providing module configured to provide an interaction interface for selecting the template; and an interaction based selection module configured to in response to detecting an interaction for the interaction interface, selecting a template corresponding to the interaction, from a plurality of candidate templates.

According to an example implementation of the disclosure, the determining module is further configured to determine the set of attributes based on at least one of: a semantic analysis for the set of page elements, or a machine learning model describing an association between a set of page elements and a set of attributes.

According to an example implementation of the disclosure, the template comprises: a background image, and a set of insertion positions respectively corresponding to the set of attributes, and the generating module further includes: an insertion module, configured to insert the set of attributes at the set of insertion positions to generate the information card of the target object.

According to an example implementation of the disclosure, the apparatus further includes: a receiving module, configured to provide an interaction interface for receiving the page address; and a detection module, configured to, in response to detecting an interaction for the interaction interface, performing the method.

According to an example implementation of the disclosure, the apparatus further includes: sending the information card to a client device to provide the page in response to detecting an interaction with the information card.

According to an example implementation of the disclosure, the set of page elements comprises at least one of: an image, a text, a video, a link, or a component, and the set of attributes comprises at least one of: a name, a description, an image, a brand, or a price of the target object.

According to an example implementation of the disclosure, the target object comprises at least one of: a physical item or a virtual item.

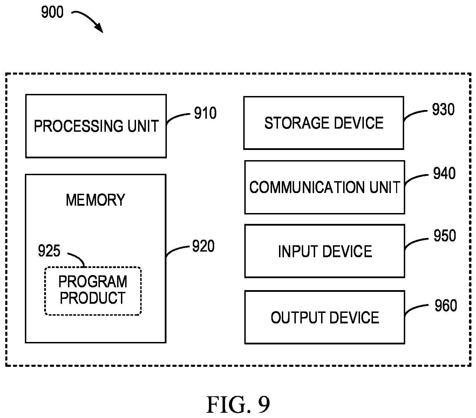

FIG. 9 illustrates a block diagram of a device 900 capable of implementing various implementations of the disclosure. It should be understood that the computing device 900 shown in FIG. 9 is merely exemplary and should not constitute any limitation on the functionality and scope of the implementations described herein. The computing device 900 shown in FIG. 9 may be configured to implement the method described above.

As shown in FIG. 9, the computing device 900 is in the form of a general-purpose computing device. Components of the computing device 900 may include, but are not limited to, one or more processors or processing units 910, a memory 920, a storage device 930, one or more communication units 940, one or more input devices 950, and one or more output devices 960. The processing unit 910 may be an actual or virtual processor and capable of performing various processes according to programs stored in the memory 920. In multiprocessor systems, multiple processing units execute computer-executable instructions in parallel to improve parallel processing capabilities of computing device 900.

Computing device 900 typically includes a plurality of computer storage media. Such media may be any available media accessible by the computing device 900, including, but not limited to, volatile and non-volatile media, removable and non-removable media. The memory 920 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 930 may be a removable or non-removable medium and may include a machine-readable medium, such as a flash drive, magnetic disk, or any other medium, which may be capable of storing information and/or data (e.g., training data for training) and may be accessed within computing device 900.

The computing device 900 may further include additional removable/non-removable, volatile/non-volatile storage media. Although not shown in FIG. 9, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 920 may include a computer program product 925 having one or more program modules configured to perform various methods or actions of various implementations of the disclosure.

The communications unit 940 implements communications with other computing devices over a communications medium. Additionally, the functionality of components of the computing device 900 may be implemented in a single computing cluster or multiple computing machines capable of communicating over a communication connection. Thus, the computing device 900 may operate in a networked environment using logical connections with one or more other servers, network personal computers (PCs), or another network node.

The input device 950 may be one or more input devices, such as a mouse, a keyboard, a trackball, or the like. The output device 960 may be one or more output devices, such as a display, a speaker, a printer, or the like. Computing device 900 may also communicate with one or more external devices (not shown) through the communication unit 940 as needed, external devices such as storage devices, display devices, etc. , communicate with one or more devices that enable a user to interact with computing device 900, or communicate with any device (e.g., network card, modem, etc. ) that enables computing device 900 to communicate with one or more other computing devices. Such communication may be performed via an input/output (I/O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided, the computer program product being tangibly stored on a non-transitory computer-readable medium and including computer-executable instructions, the computer-executable instructions being executed by a processor to implement the method described above. According to example implementations of the disclosure, there is provided a computer program product having stored thereon a computer program, which when executed by a processor, implements the method described above.

Aspects of the disclosure are described herein with reference to flowcharts and/or block diagrams of methods, apparatuses, devices, and computer program products implemented in accordance with the disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatus to implement the functions/acts specified in the flowchart and/or block(s) in block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block(s) in block diagram .

The computer-readable program instructions may be loaded onto a computer, other programmable data processing apparatus, or other devices, such that a series of operational steps are performed on a computer, other programmable data processing apparatus, or other devices to produce a computer-implemented process such that the instructions executed on a computer, other programmable data processing apparatus, or other devices implement the functions/acts specified in the flowchart and/or block(s) in block diagram.

The flowchart and block diagrams in the figures show architecture, functionality, and operation of possible implementations of systems, methods, and computer program products according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, the practical application, or improvements to the technology in the marketplace, or to enable others of ordinary skill in the art to understand the various implementations disclosed herein.

## Claims

1. A method (700) for generating an information card of an object, comprising:
in response to receiving (710) a page address of a page comprising a set of attributes of a target object, obtaining (720) a set of page elements in the page;
determining (730) the set of attributes of the target object based on the set of page elements; and
generating (740) an information card of the target object based on the set of attributes.

2. The method (700) of claim 1, wherein generating (740) the information card of the target object further comprises:
obtaining a template for specifying a layout of the information card; and
generating the information card of the target object based on the template.

3. The method (700) of claim 2, wherein obtaining the template for specifying the layout of the information card comprises:
determining a page type of the page based on the set of page elements, the page type comprising at least one of: a single object type, a multi-object type, or a homepage type; and
selecting the template matching the page type, from a plurality of candidate templates.

4. The method (700) of claim 2, wherein obtaining the template for specifying the layout of the information card comprises:
providing an interaction interface for selecting the template; and
in response to detecting an interaction for the interaction interface, selecting a template corresponding to the interaction, from a plurality of candidate templates.

5. The method (700) of claim 1, wherein determining (730) the set of attributes of the target object based on the set of page elements comprises:
determining the set of attributes based on at least one of: a semantic analysis for the set of page elements, or a machine learning model describing an association between a set of page elements and a set of attributes.

6. The method (700) of claim 2, wherein the template comprises: a background image, and a set of insertion positions respectively corresponding to the set of attributes, and generating the information card of the target object comprises: inserting the set of attributes at the set of insertion positions to generate the information card of the target object.

7. The method (700) of claim 1, further comprising:
providing an interaction interface for receiving the page address; and
in response to detecting an interaction for the interaction interface, performing the method.

8. The method (700) of claim 1, further comprising: sending the information card to a client device to provide the page in response to detecting an interaction with the information card.

9. The method (700) of claim 1, wherein the set of page elements comprises at least one of: an image, a text, a video, a link, or a component, and the set of attributes comprises at least one of: a name, a description, an image, a brand, or a price of the target object.

10. The method (700) of claim 1, wherein the target object comprises at least one of: a physical item or a virtual item.

11. An apparatus (800) for generating an information card of an object, comprising:
an obtaining module (810) configured to in response to receiving a page address of a page comprising a set of attributes of a target object, obtain a set of page elements in the page;
a determining module (820) configured to determine the set of attributes of the target object based on the set of page elements; and
a generating module (830) configured to generate an information card of the target object based on the set of attributes .

12. An electronic device (900) comprising:
at least one processing unit (910); and
at least one memory (920) coupled to the at least one processing unit (910) and storing instructions for execution by the at least one processing unit (910), the instructions, when executed by the at least one processing unit (910), causing the electronic device (900) to perform the method of any of claims 1-10.

13. A computer-readable storage medium having stored thereon a computer program which, when executed by a processor, causes the processor to implement the method of any of claims 1-10.
